# EUROPEAN PATENT SPECIFICATION

(11) **EP 4 503 067 B1**
(45) Date of publication and mention of the grant of the patent: **14.01.2026**
(21) Application number: 24192372.1
(22) Date of filing: 01.08.2024
(51) Int. Cl.: H01F 10/06

(54) **SPIN TRANSDUCER**
SPIN-WANDLER
TRANSDUCTEUR DE SPIN

(30) Priority: 04.08.2023 US 202363530783 P; 15.09.2023 US 202363538711 P
(43) Date of publication of application: 05.02.2025
(73) Proprietor: TDK Corporation, Tokyo 103-6128 (JP)
(72) Inventor: SASAKI, Tomoyuki, Tokyo 103-6128 (JP)
(74) Representative: Epping - Hermann - Fischer

(56) References cited:
- WO-A1-2019/005147
- US-A1- 2018 351 082

## Description

### BACKGROUND

### Field

The present disclosure relates to a spin transducer.

### Description of Related Art

Transformers that change the intensity of current or voltage are one of the main electronic components used in various electronic devices. For example, Patent Document 1 discloses a transformer that uses a coil.

US 2018/3510822 and WO 2019/005147 show spin devices for logic devices or AC/DC converters, respectively.

### [Patent Documents]

[Patent Document 1] Japanese Unexamined Patent Application, First Publication No. 2023-018317

### SUMMARY

There is a trade-off relationship between the size of the coil and the amount of the inductance, and it is difficult to achieve a large inductance with a small coil. Therefore, the transformer that uses a coil has a limitation in miniaturization.

The present disclosure has been made in consideration of the above circumstances, and has an object to provide a spin transducer that can be miniaturized and that can change the intensity of current or voltage.

In order to solve the above problems, the present disclosure provides the following means.

A spin transducer according to a first aspect includes a first spin orbit torque wiring layer, a second spin orbit torque wiring layer, and a first spin wave propagation layer. The first spin wave propagation layer is between the first spin orbit torque wiring layer and the second spin orbit torque wiring layer. A current or voltage is applied between a first end and a second end of the first spin orbit torque wiring layer in a first direction, and a current or voltage between a third end and a fourth end of the second spin orbit torque wiring layer is output. The third end and the fourth end are at different positions on the second spin orbit torque wiring layer in a second direction perpendicular to the first direction.

### BRIEF DESCRIPTION OF THE DRAWINGS

FIG. 1 is a plan view of a spin transducer according to a first embodiment.
FIG. 2 is a first cross-sectional view of the spin transducer according to the first embodiment.
FIG. 3 is a second cross-sectional view of the spin transducer according to the first embodiment.
FIG. 4 is a diagram for describing a function of the spin transducer according to the first embodiment.
FIG. 5 is a schematic diagram of an example of a use of the spin transducer according to the first embodiment.
FIG. 6 is a plan view of a first modified example of the spin transducer according to the first embodiment.
FIG. 7 is a plan view of a second modified example of the spin transducer according to the first embodiment.
FIG. 8 is a plan view of a third modified example of the spin transducer according to the first embodiment.
FIG. 9 is a plan view of a spin transducer according to a second embodiment.
FIG. 10 is a first cross-sectional view of the spin transducer according to the second embodiment.
FIG. 11 is a second cross-sectional view of the spin transducer according to the second embodiment.
FIG. 12 is a diagram for describing a function of the spin transducer according to the second embodiment.
FIG. 13 is a plan view of a first modified example of the spin transducer according to the second embodiment.
FIG. 14 is a first cross-sectional view of the first modified example of the spin transducer according to the second embodiment.

### DETAILED DESCRIPTION OF THE INVENTION

The present embodiment will be described in detail below with reference to the drawings as appropriate. The drawings used in the following description may show characteristic parts in an enlarged scale for the sake of convenience in order to make the characteristics easier to understand, and dimensional ratios of each component may differ from actual ones. The materials, dimensions, and the like exemplified in the following description are merely examples, and the present disclosure is not limited thereto. They can be modified as appropriate within the scope of effects of the present disclosure.

First, directions are defined. One direction of a surface in which each layer extends is defined as an X direction, and a direction perpendicular to the X direction on the surface is defined as a Y direction. For example, a first direction that connects a first end e1 and a second end e2 of a first spin orbit torque wiring layer is defined as the X direction. A second direction perpendicular to the first direction is, for example, a Y direction, and a thickness direction of each layer is a Z direction. The Z direction is perpendicular to the X direction and the Y direction.

### "First embodiment"

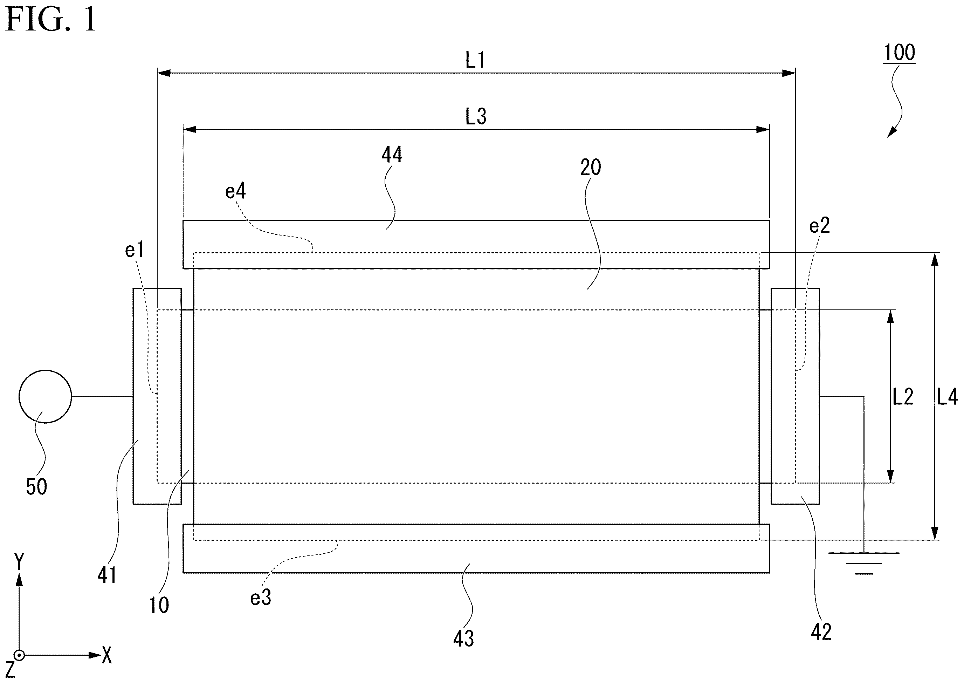

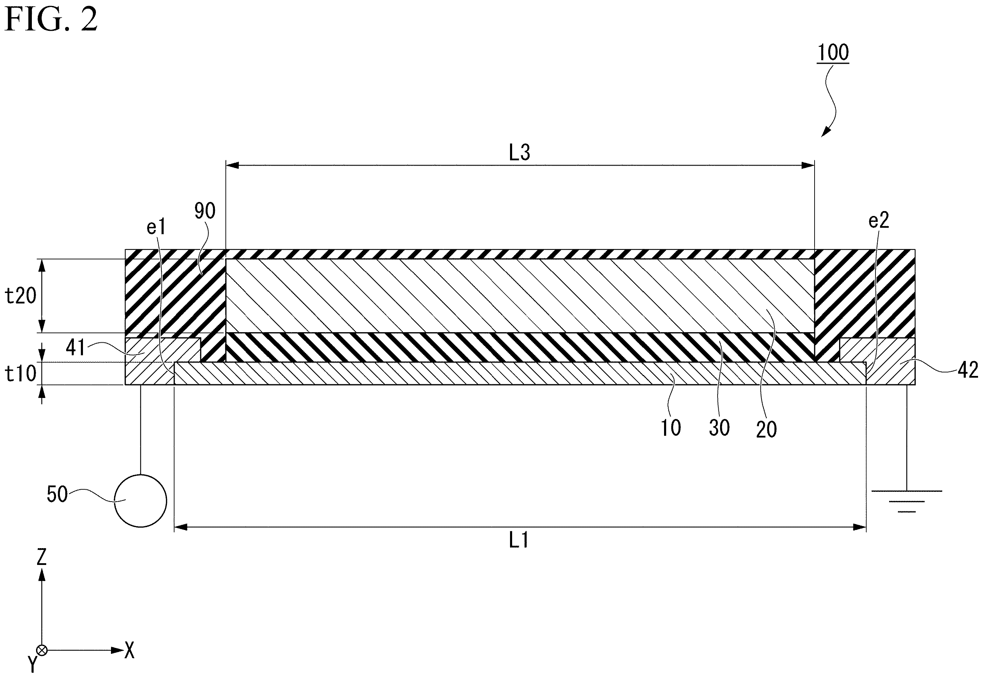

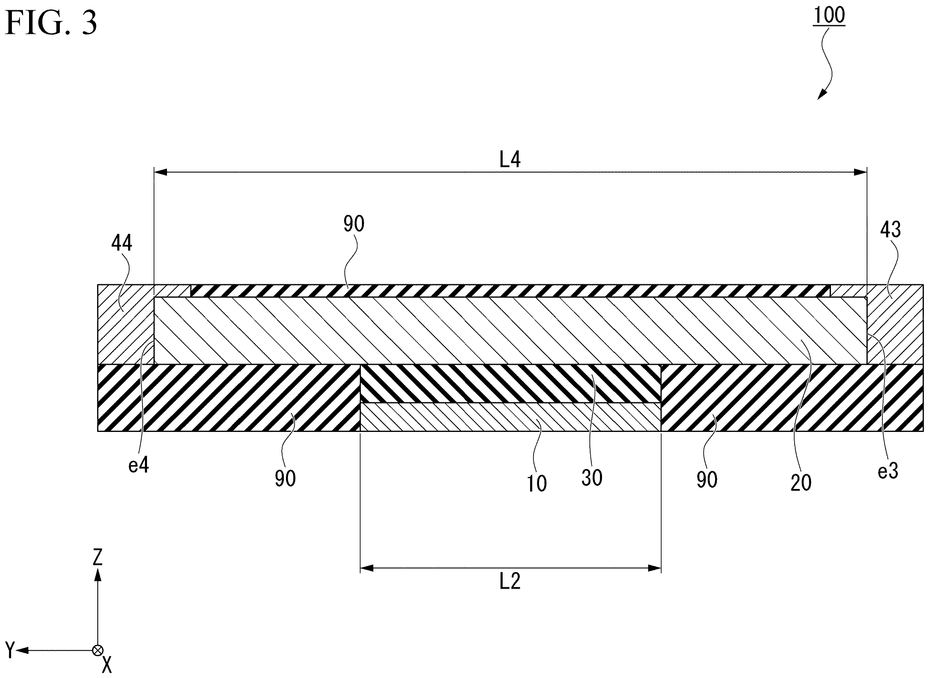

FIG. 1 is a plan view of a spin transducer 100 according to a first embodiment when seen in the Z direction. FIG. 2 is an XZ cross-sectional view passing through a center of the spin transducer in the Y direction according to the first embodiment. FIG. 3 is a YZ cross-sectional view passing through a center of the spin transducer in the X direction according to the first embodiment.

The spin transducer 100 is a signal transducer which produces an output signal that differs from an input signal. For example, the spin transducer 100 may function as a current-to-voltage converter to convert current to voltage, a voltage-to-current converter to convert voltage to current, or a current or voltage transformer to change a magnitude of current or voltage.

The spin transducer 100 includes, for example, a first spin orbit torque wiring layer 10, a second spin orbit torque wiring layer 20, and a first spin wave propagation layer 30. The spin transducer 100 may further include a first terminal 41, a second terminal 42, a third terminal 43, a fourth terminal 44, and a power source 50. The periphery of the spin transducer 100 may be covered with an insulating layer 90.

The first terminal 41 is connected to a first end e1 of the first spin orbit torque wiring layer 10. The second terminal 42 is connected to a second end e2 of the first spin orbit torque wiring layer 10. The first terminal 41 and the second terminal 42 are terminals for writing a signal to the spin transducer 100. The first terminal 41 and the second terminal 42 are conductors. For example, the first terminal 41 is connected to the power source 50, and the second terminal 42 is connected to the ground. The power source 50 may be connected to the second terminal 42. When the power source 50 and the ground are in direct contact with the first spin orbit torque wiring layer 10, the first terminal 41 and the second terminal 42 may be omitted.

The third terminal 43 is connected to a first end e3 of the second spin orbit torque wiring layer 20. The first end e3 is an example of a third end. The fourth terminal 44 is connected to a second end e4 of the second spin orbit torque wiring layer 20. The second end e4 is an example of a fourth end. The third terminal 43 and the fourth terminal 44 are terminals for reading out a signal from the spin transducer 100. The third terminal 43 and the fourth terminal 44 are conductors. For example, the third terminal 43 and the fourth terminal 44 are connected to other elements. The third terminal 43 and the fourth terminal 44 may be omitted.

The power source 50 is connected to the first spin orbit torque wiring layer 10. The power source 50 is, for example, a voltage source or a current source. The power source 50 is configured to be able to apply a current or a voltage between the first end e1 and the second end e2. For example, when the power source 50 is a voltage source, the power source 50 generates a potential difference between the first end e1 and the second end e2 of the first spin orbit torque wiring layer 10. For example, when the power source 50 is a current source, the power source 50 causes a current to flow between the first end e1 and the second end e2 of the first spin orbit torque wiring layer 10.

The insulating layer 90 is, for example, silicon oxide (SiOₓ), silicon nitride (SiNₓ), silicon carbide (SiC), chromium nitride, silicon carbonitride (SiCN), silicon oxynitride (SiON), aluminum oxide (Al₂O₃), zirconium oxide (ZrOₓ), or the like.

The first spin orbit torque wiring layer 10 is a wiring for writing a signal to the spin transducer 100. A current or voltage is applied between the first end e1 and the second end e2 of the first spin orbit torque wiring layer 10 in the X direction.

The first spin orbit torque wiring layer 10 includes any one of a metal, an alloy, an intermetallic compound, a metal boride, a metal carbide, a metal silicide, and a metal phosphide that has a function of generating a spin current by a spin Hall effect when a current flows.

The first spin orbit torque wiring layer 10 contains, for example, a non-magnetic heavy metal as a main component. The heavy metal refers to a metal having a specific gravity equal to or greater than that of yttrium (Y). The non-magnetic heavy metal is, for example, a non-magnetic metal having d electrons or f electrons in the outermost shell and a large atomic number equal to or greater than 39. The first spin orbit torque wiring layer 10 is made of, for example, Hf, Ta, W, or Ti. The non-magnetic heavy metals have stronger spin orbit interactions than other metals. The spin Hall effect is caused by the spin orbit interactions. When spins are unevenly distributed in the first spin orbit torque wiring layer 10 due to the spin Hall effect, a spin current J_{S} is easily generated.

The first spin orbit torque wiring layer 10 may contain a magnetic metal. The magnetic metal is a ferromagnetic metal or an antiferromagnetic metal. A small amount of magnetic metal contained in a non-magnetic material becomes a scattering factor of spins. The small amount is, for example, 3% or less of a total of molar proportions of elements constituting the first spin orbit torque wiring layer 10. When the spins are scattered by the magnetic metal, the spin orbit interaction is enhanced, and the efficiency of generating a spin current relative to a current increases.

The first spin orbit torque wiring layer 10 may include a topological insulator. The topological insulator is a material in which the inside of the material is an insulator or a high resistance material, but a spin-polarized metallic state occurs on a surface thereof. In the topological insulator, an internal magnetic field is generated due to the spin orbit interaction. In the topological insulator, a new topological phase emerges due to the effect of the spin orbit interaction even in the absence of an external magnetic field. The topological insulator can generate pure spin currents with high efficiency due to strong spin orbit interaction and breaking of inversion symmetry at an edge. Furthermore, in the topological insulator, since the current flows only on the surface, it is possible to achieve high current density with a small amount of current.

Examples of the topological insulator include Sn, SnTe, Bi_{1.5}Sb_{0.5}Te_{1.7}Se_{1.3}, TlBiSe₂, Bi₂Te₃, Bir₁₋ₓSbₓ, (Bi₁₋ₓSbₓ)₂Te₃, (Nd,Pr)₂Ir₂O₇, and the like. The topological insulator is capable of generating a spin current with high efficiency.

The first spin orbit torque wiring layer 10 has, for example, a length L1 in the X direction that is longer than a length L2 in the Y direction. The spin current is generated when electrons flowing through the first spin orbit torque wiring layer 10 are scattered. The X direction is a direction in which electrons flow in the first spin orbit torque wiring layer 10. When the length L1 in the X direction is long, the number of times that electrons are scattered from the first end e1 to the second end e2 increases. When the number of times that electrons are scattered increases, the efficiency with which a spin current is generated in the first spin orbit torque wiring layer 10 increases.

The second spin orbit torque wiring layer 20 is a wiring for reading out a signal from the spin transducer 100. The spin transducer 100 outputs a current or a voltage between the first end e3 and the second end e4 of the second spin orbit torque wiring layer 20.

The first end e3 and the second end e4 of the second spin orbit torque wiring layer 20 are at different positions in the Y direction from the first end e1 and the second end e2 of the first spin orbit torque wiring layer 10. For example, a straight line that connects the first end e1 and the second end e2 of the first spin orbit torque wiring layer 10 at the shortest distance intersects with a straight line that connects the first end e3 and the second end e4 of the second spin orbit torque wiring layer 20 at the shortest distance. The straight line that connects the first end e3 and the second end e4 of the second spin orbit torque wiring layer 20 at the shortest distance may be inclined with respect to the Y direction.

At least a part of the second spin orbit torque wiring layer 20 faces the first spin orbit torque wiring layer 10 with the first spin wave propagation layer 30 interposed therebetween.

The second spin orbit torque wiring layer 20 includes any one of a metal, an alloy, an intermetallic compound, a metal boride, a metal carbide, a metal silicide, and a metal phosphide that has the function of generating a spin current by the spin Hall effect when a current flows. The second spin orbit torque wiring layer 20 can be made of the same material as the first spin orbit torque wiring layer 10. The second spin orbit torque wiring layer 20 may be made of the same material as the first spin orbit torque wiring layer 10, or may be made of a different material. The second spin orbit torque wiring layer 20 is preferably a topological insulator.

For example, a length L3 of the second spin orbit torque wiring layer 20 in the X direction is longer than a length L4 thereof in the Y direction. When the length L3 in the X direction is longer than the length L4 in the Y direction, resistance of the second spin orbit torque wiring layer 20 in the Y direction becomes small. This is because a flow path for a current flowing in the Y direction is expanded. When the potential difference between the first end e3 and the second end e4 is constant, an amount of current flowing between the first end e3 and the second end e4 increases as the resistance of the second spin orbit torque wiring layer 20 in the Y direction becomes lower. That is, in the spin transducer 100, when the length L3 of the second spin orbit torque wiring layer 20 in the X direction is longer than the length L4 thereof in the Y direction, an output current output from the spin transducer 100 becomes large.

A thickness t20 of the second spin orbit torque wiring layer 20 in the Z direction is, for example, thicker than a thickness t10 of the first spin orbit torque wiring layer 10 in the Z direction. As the thickness t10 becomes thinner, the first spin orbit torque wiring layer 10 can generate a spin current more effectively. Furthermore, as the thickness t20 of the second spin orbit torque wiring layer 20 in the Z direction becomes thicker, the resistance of the second spin orbit torque wiring layer 20 in the Y direction can be reduced. This is because the flow path for the current flowing in the Y direction is expanded. When the spin transducer 100 satisfies this configuration, the output current output from the spin transducer 100 increases.

The second spin orbit torque wiring layer 20 overlaps the first spin orbit torque wiring layer 10 when seen in the Z direction. It is preferable that an overlapping surface on which the first spin orbit torque wiring layer 10 and the second spin orbit torque wiring layer 20 overlap satisfies (a/b)²×r>1. Here, a is a length of the overlapping surface in the X direction, b is a length of the overlapping surface in the Y direction, r satisfies r=B/A, A is a current density of the first spin orbit torque wiring layer 10, and B is a current density of the second spin orbit torque wiring layer 20. When this relationship is satisfied, the current or voltage input to the spin transducer 100 can be amplified and output.

The first spin wave propagation layer 30 is sandwiched between the first spin orbit torque wiring layer 10 and the second spin orbit torque wiring layer 20. The first spin wave propagation layer 30 propagates the spins injected from the first spin orbit torque wiring layer 10 as spin waves, and transmits them to the second spin orbit torque wiring layer 20.

The first spin wave propagation layer 30 is, for example, a magnetic insulator. When the first spin wave propagation layer 30 contains a magnetic material, the spin waves can be propagated. Furthermore, since the first spin wave propagation layer 30 has insulating properties, the first spin orbit torque wiring layer 10 and the second spin orbit torque wiring layer 20 can be electrically separated from each other. The first spin wave propagation layer 30 may be made of any of a ferromagnetic material, a ferrimagnetic material, and an antiferromagnetic material.

A thickness of the first spin wave propagation layer 30 is preferably equal to or less than a spin conduction length. The spin conduction length corresponds to a spin diffusion length in a conductive material and is a distance over which input spins are reduced to half. When the thickness of the first spin wave propagation layer 30 is equal to or less than the spin conduction length, a damping rate of spins in the first spin wave propagation layer 30 can be set to 30% or less. The thickness of the first spin wave propagation layer 30 is, for example, 6 nm or more.

The spin transducer 100 can be fabricated by repeating a lamination step of each of the layers and a processing step of each of the layers. The lamination step of each of the layers can be performed by, for example, sputtering, chemical vapor deposition (CVD), electron beam deposition (EB deposition), atomic laser deposition, or the like. The processing step of each of the layers can be performed using, for example, photolithography, or the like.

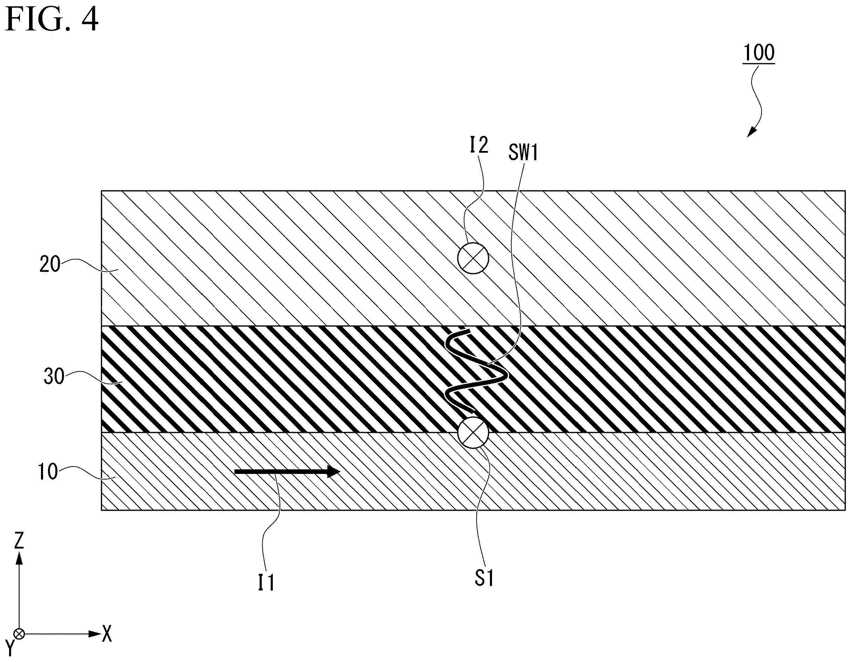

A function of the spin transducer 100 will now be described. FIG. 4 is a schematic diagram for describing the function of the spin transducer 100.

The spin transducer 100 is an element that converts a signal input between the first terminal 41 and the second terminal 42 and outputs the converted signal as an output signal from between the third terminal 43 and the fourth terminal 44.

First, a potential difference is applied between the first terminal 41 and the second terminal 42 using the power source 50. This becomes an input signal to the spin transducer 100. When a potential difference occurs between the first terminal 41 and the second terminal 42, a current I1 flows in the X direction of the first spin orbit torque wiring layer 10.

The current I1 flowing through the first spin orbit torque wiring layer 10 generates a spin current due to the spin Hall effect.

The spin Hall effect is a phenomenon in which, when a current is applied, a spin current is induced in a direction (for example, the z direction) perpendicular to the direction of the current flow due to the spin orbit interaction. The spin Hall effect is similar to the typical Hall effect in that a direction of motion (movement) of moving charges (electrons) can be bent. In the typical Hall effect, the direction of motion of a charged particle moving in a magnetic field is bent by the Lorentz force. On the other hand, the spin Hall effect allows a direction of movement of the spin to be bent simply by movement of electrons (a flow of current) even in the absence of a magnetic field.

For example, when a current flows in the X direction of the first spin orbit torque wiring layer 10, for example, the spins polarized in the -y direction are bent in the -Z direction relative to a direction of travel, and the spins S1 polarized in the +y direction are bent in the +Z direction relative to the direction of travel.

The spins S1 are injected into the first spin wave propagation layer 30 adjacent to the first spin orbit torque wiring layer 10. Magnetization in the first spin wave propagation layer 30 undergoes precession due to the spins S1 injected into the first spin wave propagation layer 30. The precession of the magnetization becomes a spin wave SW1 and propagates through the first spin wave propagation layer 30.

The spins propagated as the spin wave SW1 are accumulated between the first spin wave propagation layer 30 and the second spin orbit torque wiring layer 20. When the spin state in the second spin orbit torque wiring layer 20 becomes non-uniform, a current I2 is generated in the Y direction of the second spin orbit torque wiring layer 20. This is a reverse phenomenon of the phenomenon in which the current I1 generates a spin current in the first spin orbit torque wiring layer 10, and the spin generates the current I2.

The current I2 is generated between the third terminal 43 and the fourth terminal 44. That is, the spin transducer 100 converts the current I1 into the current I2. When the resistance of the first spin orbit torque wiring layer 10 is sufficiently high, the current I1 can be expressed as a potential difference. In this case, the spin transducer 100 converts a voltage into the current I2. When the resistance of the second spin orbit torque wiring layer 20 is sufficiently high, the current I2 can be expressed as a potential difference. In this case, the spin transducer 100 converts the current I1 into a voltage.

The current I2 flowing between the first end e3 and the second end e4 of the second spin orbit torque wiring layer 20 can be made larger than the current I1 flowing between the first end e1 and the second end e2. For example, the current I2 can be made larger than the current I1 by widening a current flow path in the Y direction of the second spin orbit torque wiring layer 20 or narrowing a current flow path in the X direction of the first spin orbit torque wiring layer 10.

Furthermore, a second potential difference between the first end e3 and the second end e4 of the second spin orbit torque wiring layer 20 can be made larger than a first potential difference between the first end e1 and the second end e2. For example, the second potential difference can be made larger than the first potential difference by narrowing the current flow path in the Y direction of the second spin orbit torque wiring layer 20 or increasing the length of the second spin orbit torque wiring layer 20 in the Y direction.

The spin transducer 100 according to the first embodiment converts an input signal into an output signal using a new mechanism. Furthermore, since the spin transducer 100 according to the first embodiment utilizes energy conversion between the current and the spin, there is no restriction in the number of turns of a coil, or the like, and it is easy to reduce a size.

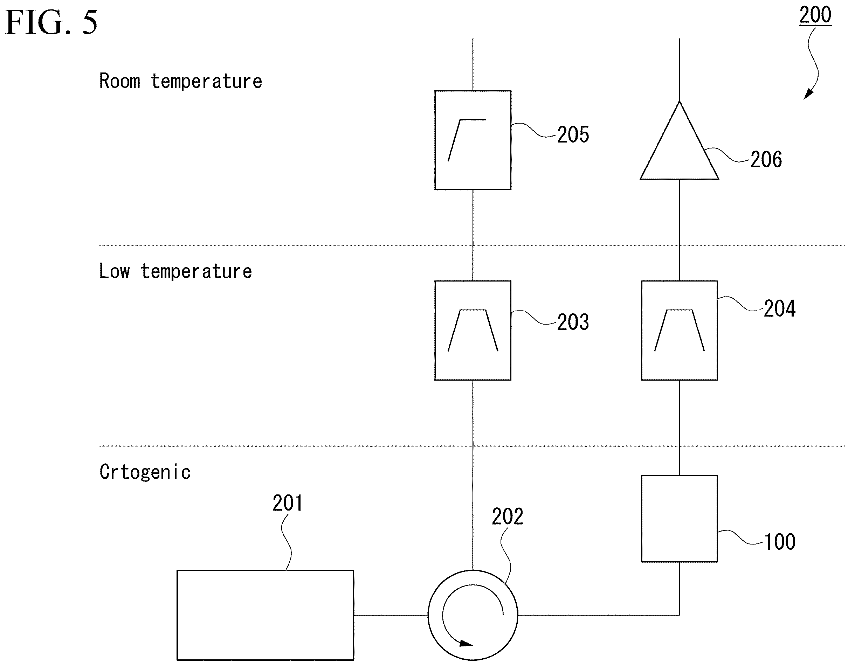

The spin transducer 100 according to this embodiment can be applied to, for example, a quantum computer. FIG. 5 is a schematic diagram of a quantum computer to which the spin transducer 100 according to this embodiment is applied. The quantum computer 200 includes, for example, a quantum processor 201, the spin transducer 100, a non-reciprocal circuit element 202, filters 203, 204, and 205, and an amplifier 206 .

The quantum processor 201 performs quantum computation. The non-reciprocal circuit element 202 delivers a readout signal of a quantum bit from the quantum processor 201. The non-reciprocal circuit element 202 is, for example, a circulator. The spin transducer 100 converts an input signal into an output signal. The filters 203, 204, and 205, for example, limit a frequency of a propagating signal. The amplifier 206 amplifies the readout signal.

For example, a superconducting quantum computer operates at extremely low temperature. Thus, the spin transducer 100 in the vicinity of the quantum processor 201 is also disposed at a position at which it is exposed to an extremely low temperature environment. It is difficult to secure a large volume of space in an extremely low temperature environment, which demands miniaturization of the spin transducer 100. The spin transducer 100 according to this embodiment is easily miniaturized and is suitable for application to the integration of electronic components in a quantum computer.

Although an example of the first embodiment has been shown so far, the present disclosure is not limited to the embodiment, and various modified examples are possible.

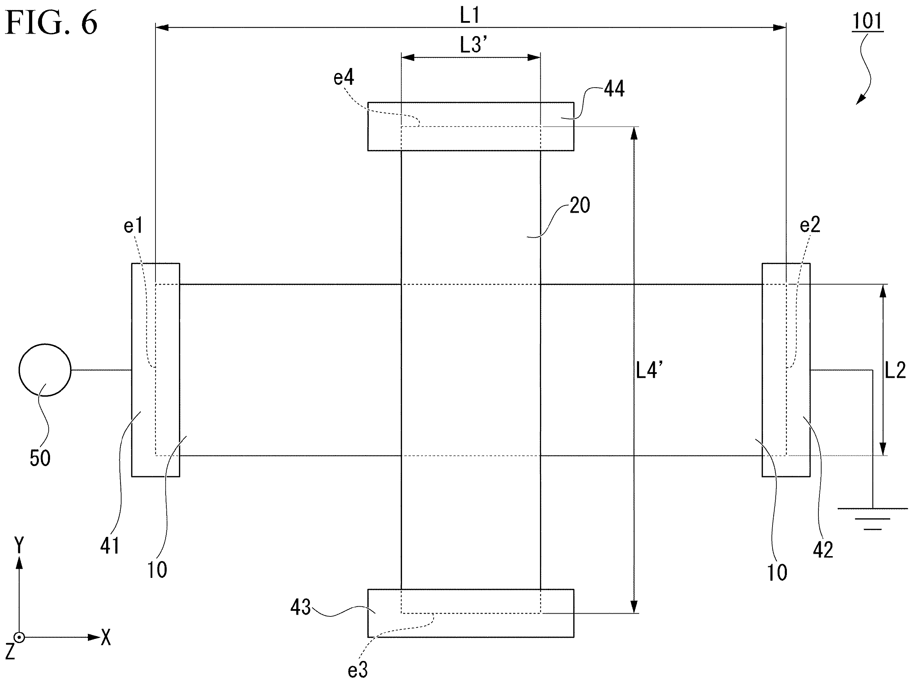

FIG. 6 is a plan view of a spin transducer 101 according to a first modified example of the first embodiment. As shown in FIG. 6, a length L3' of the second spin orbit torque wiring layer 20 in the X direction may be shorter than a length L4' in the Y direction. When the length L4' of the second spin orbit torque wiring layer 20 in the Y direction is long, the resistance of the second spin orbit torque wiring layer 20 between the third terminal 43 and the fourth terminal 44 becomes large. When the length L3' of the second spin orbit torque wiring layer 20 in the X direction is short, the current flow path becomes narrower, and the resistance of the second spin orbit torque wiring layer 20 between the third terminal 43 and the fourth terminal 44 becomes large. That is, in the spin transducer 100, an output voltage output from the spin transducer 100 can be increased by making the length L4' of the second spin orbit torque wiring layer 20 in the Y direction longer than the length L3' in the X direction.

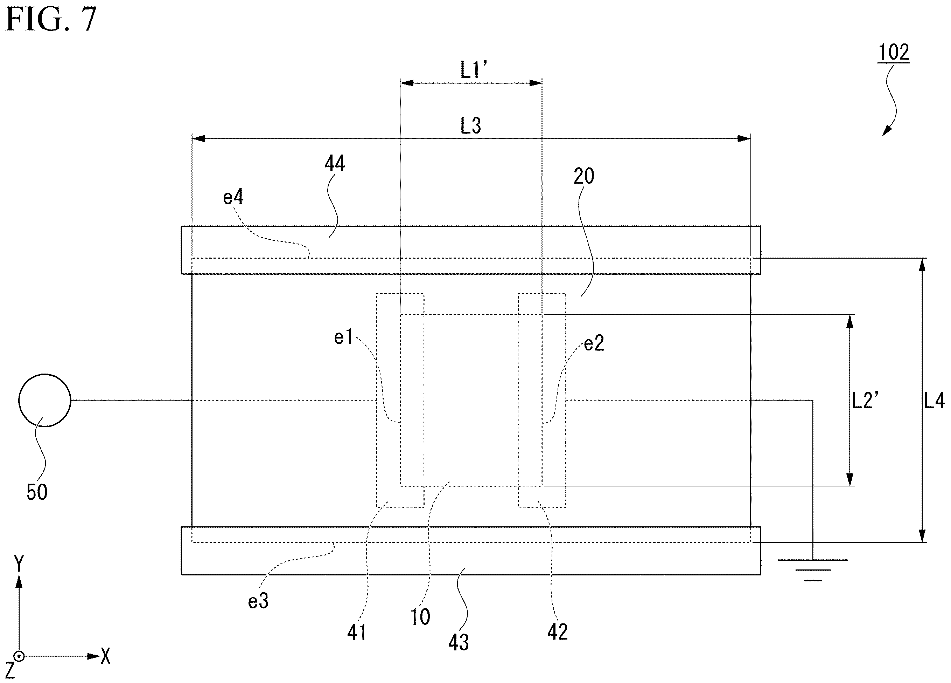

FIG. 7 is a plan view of a spin transducer 102 according to a second modified example. As shown in FIG. 7, a length L1' of the first spin orbit torque wiring layer 10 in the X direction may be shorter than a length L2' in the Y direction. The first spin orbit torque wiring layer 10 often has a high resistance. Element resistance of the spin transducer 102 can be reduced by shortening the length L1' of the first spin orbit torque wiring layer 10 in the X direction.

Furthermore, a length L3 of the second spin orbit torque wiring layer 20 in the X direction may be longer than the length L1' of the first spin orbit torque wiring layer 10 in the X direction. When the output current output from the spin transducer 100 is to be increased, it is preferable that the length L3 of the second spin orbit torque wiring layer 20 in the X direction is long.

The length L3 in the X direction and the length L4 in the Y direction of the second spin orbit torque wiring layer 20 can be set arbitrarily, regardless of the length L1 in the X direction and the length L2 in the Y direction of the first spin orbit torque wiring layer 10. This is because the first spin orbit torque wiring layer 10 and the second spin orbit torque wiring layer 20 are formed in different layers.

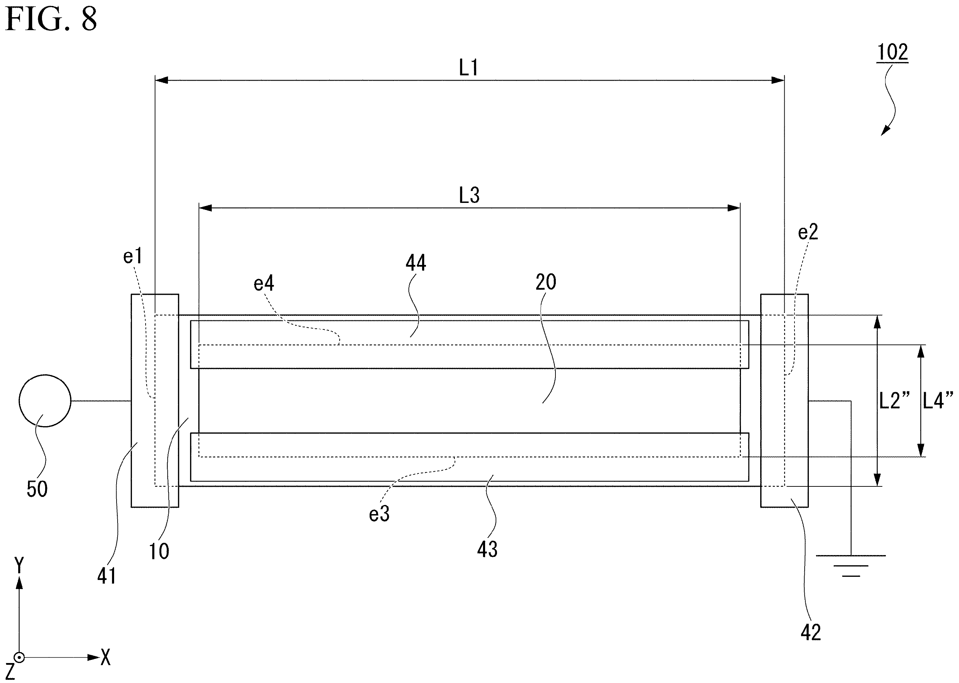

FIG. 8 is a plan view of a spin transducer 103 according to a third modified example. As shown in FIG. 8 , a length L4" of the second spin orbit torque wiring layer 20 in the Y direction may be shorter than a length L2" of the first spin orbit torque wiring layer 10 in the Y direction. When the output current output from the spin transducer 100 is to be increased, it is preferable that the length L4" of the second spin orbit torque wiring layer 20 in the Y direction is short.

Although several modified examples have been presented so far, the spin transducer according to the first embodiment is not limited to these examples. The shape can be freely designed according to the functions required in the spin transducer.

For example, when the output current output from the spin transducer 100 is increased, it is preferable that the length L3 of the second spin orbit torque wiring layer 20 in the X direction is long, and it is preferable that the length L4 of the second spin orbit torque wiring layer 20 in the Y direction is short. For example, the length L3 of the second spin orbit torque wiring layer 20 in the X direction may be made longer than the length L1 of the first spin orbit torque wiring layer 10 in the X direction. Furthermore, the length L4 of the second spin orbit torque wiring layer 20 in the Y direction may be made shorter than the length L2 of the first spin orbit torque wiring layer 10 in the Y direction.

Furthermore, for example, when the output voltage output from the spin transducer 100 is increased, it is preferable that the length L3 of the second spin orbit torque wiring layer 20 in the X direction is short, and it is preferable that the length L4 of the second spin orbit torque wiring layer 20 in the Y direction is long. For example, the length L3 of the second spin orbit torque wiring layer 20 in the X direction may be shorter than the length L1 of the first spin orbit torque wiring layer 10 in the X direction. Furthermore, the length L4 of the second spin orbit torque wiring layer 20 in the Y direction may be made longer than the length L2 of the first spin orbit torque wiring layer 10 in the Y direction.

### "Second embodiment"

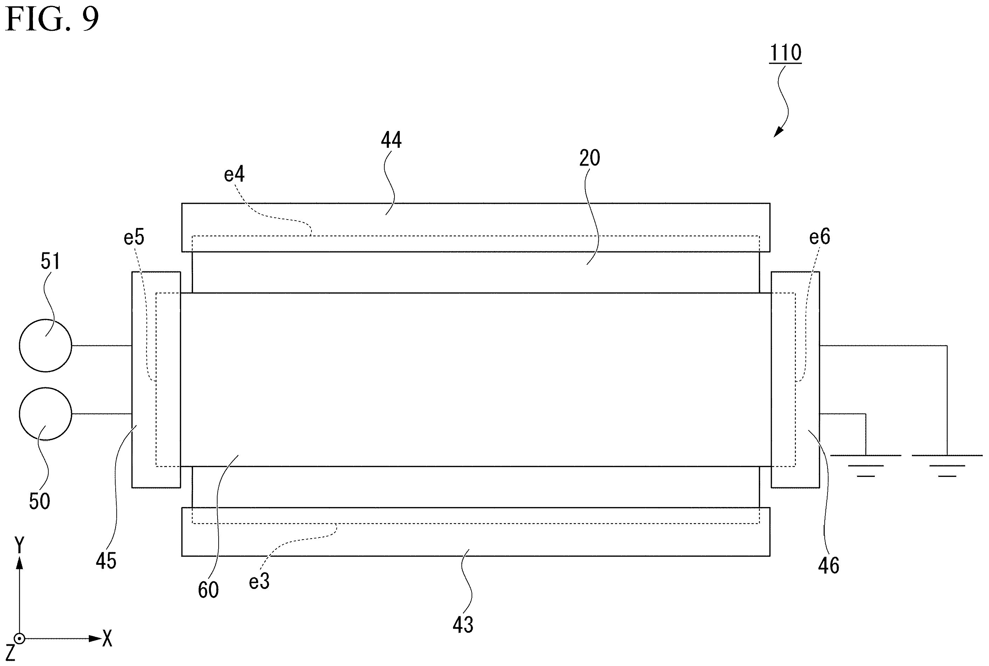

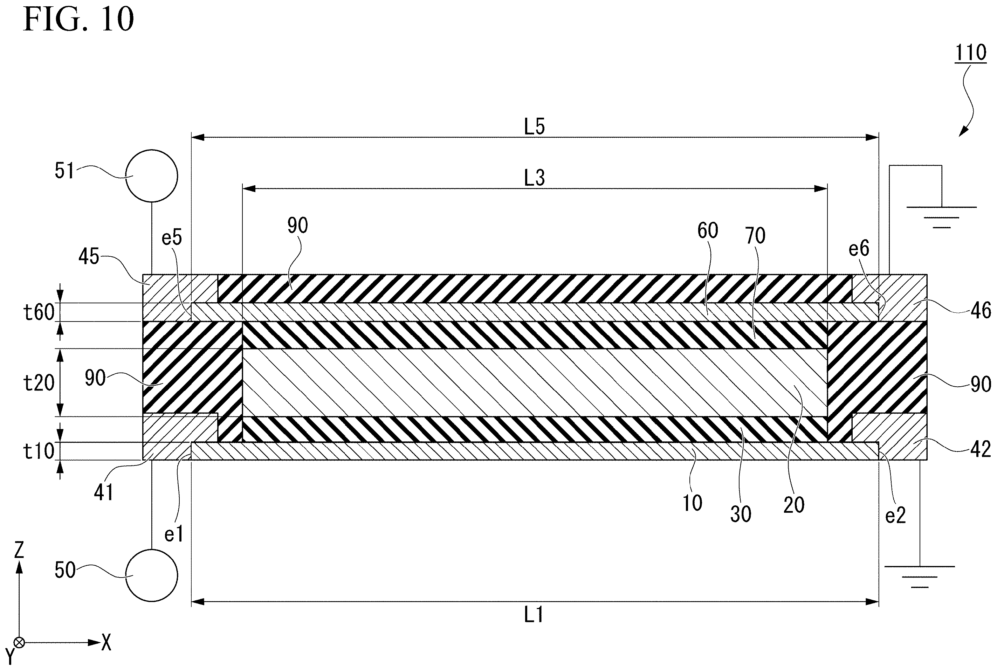

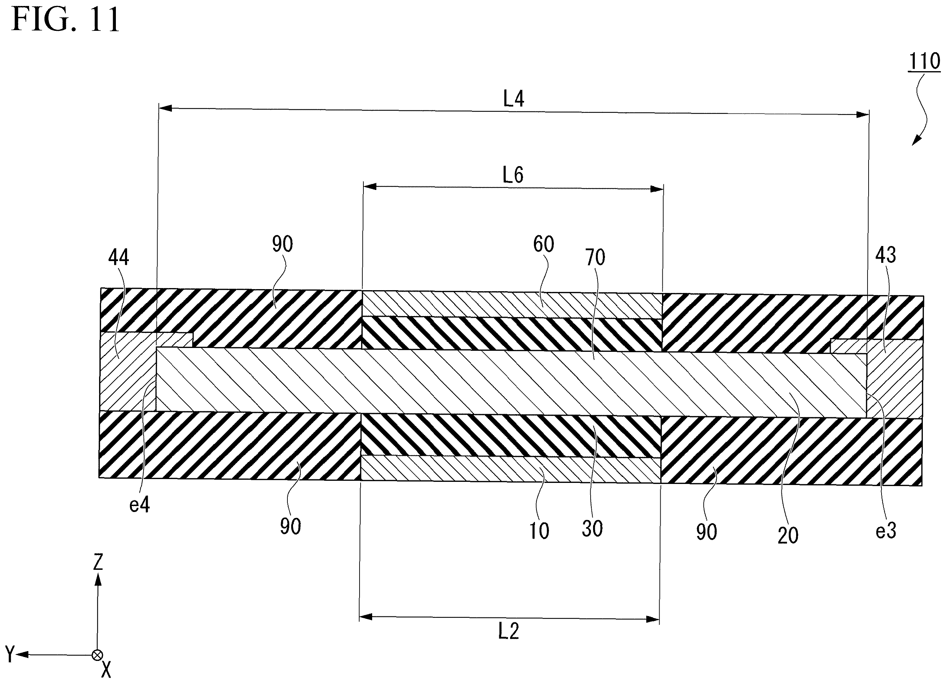

FIG. 9 is a plan view of a spin transducer 110 according to a second embodiment when seen in the Z direction. FIG. 10 is an XZ cross-sectional view passing through a center of the spin transducer 110 in the Y direction according to the second embodiment. FIG. 11 is a YZ cross-sectional view passing through a center of the spin transducer 110 in the X direction according to the second embodiment.

The spin transducer 110 includes, for example, a first spin orbit torque wiring layer 10, a second spin orbit torque wiring layer 20, a third spin orbit torque wiring layer 60, a first spin wave propagation layer 30, and a second spin wave propagation layer 70. The spin transducer 110 may further include a first terminal 41, a second terminal 42, a third terminal 43, a fourth terminal 44, a fifth terminal 45, a sixth terminal 46, a power source 50, and a power source 51. In the spin transducer 110, the same components as those in the spin transducer 100 are designated by the same reference numerals, and the description thereof will be omitted.

The fifth terminal 45 is connected to a first end e5 of the third spin orbit torque wiring layer 60. The sixth terminal 46 is connected to a second end e6 of the third spin orbit torque wiring layer 60. The fifth terminal 45 and the sixth terminal 46 are terminals for writing signals to the spin transducer 110. The fifth terminal 45 and the sixth terminal 46 are conductors. For example, the fifth terminal 45 is connected to the power source 51, and the sixth terminal 46 is connected to the ground. The power source 51 may be connected to the sixth terminal 46. When the power source 51 and the ground are in direct contact with the third spin orbit torque wiring layer 60, the fifth terminal 45 and the sixth terminal 46 may be omitted.

The power source 51 is connected to the third spin orbit torque wiring layer 60. The power source 51 is, for example, a voltage source or a current source. The power source 51 is configured to be able to apply a current or voltage between the first end e5 and the second end e6. For example, when the power source 51 is a voltage source, the power source 51 generates a potential difference between the first end e5 and the second end e6 of the third spin orbit torque wiring layer 60. For example, when the power source 51 is a current source, the power source 51 passes a current between the first end e5 and the second end e6 of the third spin orbit torque wiring layer 60.

At least a part of the third spin orbit torque wiring layer 60 faces the second spin orbit torque wiring layer 20 with the second spin wave propagation layer 70 interposed therebetween. The third spin orbit torque wiring layer 60 is located at a position at which it overlaps the first spin orbit torque wiring layer 10 in the Z direction. The first end e5 of the third spin orbit torque wiring layer 60 is, for example, located at a position at which it faces the first end e1 of the first spin orbit torque wiring layer 10 in the Z direction.

The third spin orbit torque wiring layer 60, together with the first spin orbit torque wiring layer 10, is a wiring for writing a signal to the spin transducer 110. A current or voltage is applied between the first end e5 and the second end e6 of the third spin orbit torque wiring layer 60 in the X direction. The third spin orbit torque wiring layer 60 can be made of the same material as the first spin orbit torque wiring layer 10. The third spin orbit torque wiring layer 60 may be made of the same material as the first spin orbit torque wiring layer 10 and the second spin orbit torque wiring layer 20, or may be made of a different material. The third spin orbit torque wiring layer 60 is preferably a topological insulator.

The third spin orbit torque wiring layer 60 has, for example, a length L5 in the X direction that is longer than a length L6 in the Y direction. The spin current generated in the third spin orbit torque wiring layer 60 is generated by scattering electrons flowing through the third spin orbit torque wiring layer 60. When the length L5 in the X direction is long, the number of times that the electrons are scattered from the first end e5 to the second end e6 increases. When the number of times that the electrons are scattered increases, the efficiency of generating a spin current in the third spin orbit torque wiring layer 60 increases.

Furthermore, for example, the length L5 of the third spin orbit torque wiring layer 60 in the X direction may be shorter than the length L6 in the Y direction. In this case, the element resistance of the spin transducer 110 can be reduced.

Furthermore, the length L5 of the third spin orbit torque wiring layer 60 in the X direction may be longer or shorter than the length L3 of the second spin orbit torque wiring layer 20 in the X direction. Similarly, the length L6 of the third spin orbit torque wiring layer 60 in the Y direction may be longer or shorter than the length L4 of the second spin orbit torque wiring layer 20 in the Y direction.

A thickness t60 of the third spin orbit torque wiring layer 60 in the Z direction is, for example, thinner than a thickness t20 of the second spin orbit torque wiring layer 20 in the Z direction. As the thickness t60 becomes thinner, the third spin orbit torque wiring layer 60 can generate a spin current more efficiently. Furthermore, as the thickness t20 of the second spin orbit torque wiring layer 20 in the Z direction becomes thicker, the resistance of the second spin orbit torque wiring layer 20 in the Y direction can be reduced. When the spin transducer 110 meets this requirement, the output current output from the spin transducer 110 increases.

The second spin wave propagation layer 70 is sandwiched between the third spin orbit torque wiring layer 60 and the second spin orbit torque wiring layer 20. The second spin wave propagation layer 70 propagates the spins injected from the third spin orbit torque wiring layer 60 as spin waves, and transmits them to the second spin orbit torque wiring layer 20.

The second spin wave propagation layer 70 is, for example, a magnetic insulator. When the second spin wave propagation layer 70 contains a magnetic material, the spin waves can be propagated. Furthermore, since the second spin wave propagation layer 70 has insulating properties, the third spin orbit torque wiring layer 60 and the second spin orbit torque wiring layer 20 can be electrically separated from each other. The second spin wave propagation layer 70 may be made of any of a ferromagnetic material, a ferrimagnetic material, and an antiferromagnetic material.

The second spin wave propagation layer 70 is preferably made of the same material as the first spin wave propagation layer 30. When resonant frequencies of the second spin wave propagation layer 70 and the first spin wave propagation layer 30 coincide with each other, a timing of injection of spins into the second spin orbit torque wiring layer 20 is synchronized, and the efficiency of conversion from the spin to the current in the second spin orbit torque wiring layer 20 is increased.

The thickness of the second spin wave propagation layer 70 is preferably equal to or less than the spin conduction length. The thickness of the second spin wave propagation layer 70 is, for example, equal to or greater than 6 nm.

The spin transducer 110 can be fabricated by repeating a lamination step of each of the layers and a processing step of each of the layers. The lamination step of each of the layers and the processing step of each of the layers can be the same as those in the first embodiment.

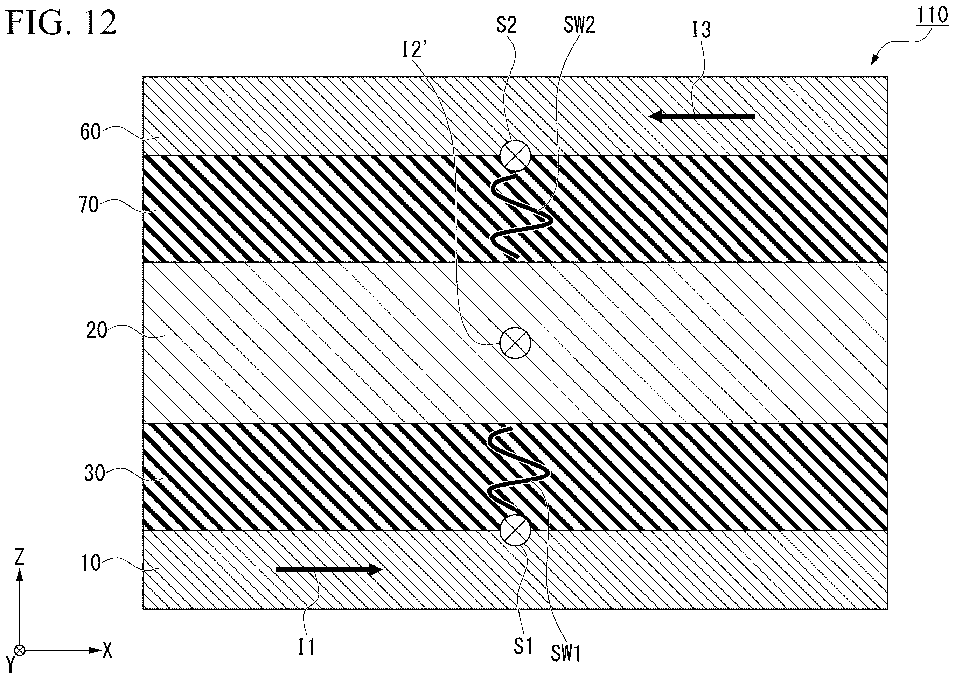

A function of the spin transducer 110 will now be described. FIG. 12 is a schematic diagram for describing the function of the spin transducer 110.

The spin transducer 110 is an element that converts signals input between the first terminal 41 and the second terminal 42 and between the fifth terminal 45 and the sixth terminal 46, and outputs them as output signals from between the third terminal 43 and the fourth terminal 44.

First, a potential difference is applied between the first terminal 41 and the second terminal 42 using a power source 50. Similarly, a potential difference is applied between the fifth terminal 45 and the sixth terminal 46 using a power source 51. These become input signals to the spin transducer 110.

A current I1 flows in the X direction of the first spin orbit torque wiring layer 10 in accordance with a potential difference between the first terminal 41 and the second terminal 42. A current I3 flows in the X direction of the third spin orbit torque wiring layer 60 in accordance with a potential difference between the fifth terminal 45 and the sixth terminal 46. Here, the current I1 and the current I3 are set so that flow directions thereof are opposite to each other. For example, when the potential of the first terminal 41 is set higher than the potential of the second terminal 42, the potential of the fifth terminal 45 is set lower than the potential of the sixth terminal 46. Conversely, when the potential of the first terminal 41 is set lower than the potential of the second terminal 42, the potential of the fifth terminal 45 may be set higher than the potential of the sixth terminal 46.

The current I1 flowing through the first spin orbit torque wiring layer 10 generates spins current due to the spin Hall effect. The spins S1 are injected into the first spin wave propagation layer 30 adjacent to the first spin orbit torque wiring layer 10. The spins S1 injected into the first spin wave propagation layer 30 become spin waves SW1 and propagate through the first spin wave propagation layer 30.

Similarly, the current I3 flowing through the third spin orbit torque wiring layer 60 generates a spin current due to the spin Hall effect. Spins S2 generated by the current I3 are injected into the second spin wave propagation layer 70 adjacent to the third spin orbit torque wiring layer 60. The spins S2 injected into the second spin wave propagation layer 70 become spin waves SW2 and propagate through the second spin wave propagation layer 70. Here, the spins S1 generated by the current I1 and the spins S2 generated by the current I3 are spins in the same direction.

Spins propagated as the spin wave SW1 are accumulated between the first spin wave propagation layer 30 and the second spin orbit torque wiring layer 20. Spins propagated as the spin wave SW2 are accumulated between the second spin wave propagation layer 70 and the second spin orbit torque wiring layer 20. When spins are injected from upper and lower surfaces of the second spin orbit torque wiring layer 20, the spin state in the second spin orbit torque wiring layer 20 becomes non-uniform. Due to the non-uniformity of the spin state, a current 12' is generated of the second spin orbit torque wiring layer 20 in the Y direction.

The current 12' is generated between the third terminal 43 and the fourth terminal 44. That is, the spin transducer 110 converts the current I1 and the current I3 into the current 12'. Furthermore, when the resistance of the first spin orbit torque wiring layer 10, the second spin orbit torque wiring layer 20 and the third spin orbit torque wiring layer 60 is high, the input/output signals of the spin transducer 110 can be made into voltages.

The spin transducer 110 according to the second embodiment converts an input signal into an output signal using a new mechanism. Furthermore, since the spin transducer 110 according to the second embodiment utilizes energy conversion between the current and the spin, there is no restriction in the number of turns of the coil, or the like, and it is easy to reduce a size. Furthermore, in the spin transducer 110 according to the second embodiment, since spins are injected from the upper and lower surfaces of the second spin orbit torque wiring layer 20, spin-to-current conversion efficiency from the spin to the current is high.

Although an example of the second embodiment has been shown so far, the present disclosure is not limited to these embodiments, and various modifications are possible. For example, a modified example of the spin transducer 100 according to the first embodiment can be applied to the spin transducer 110 according to the second embodiment.

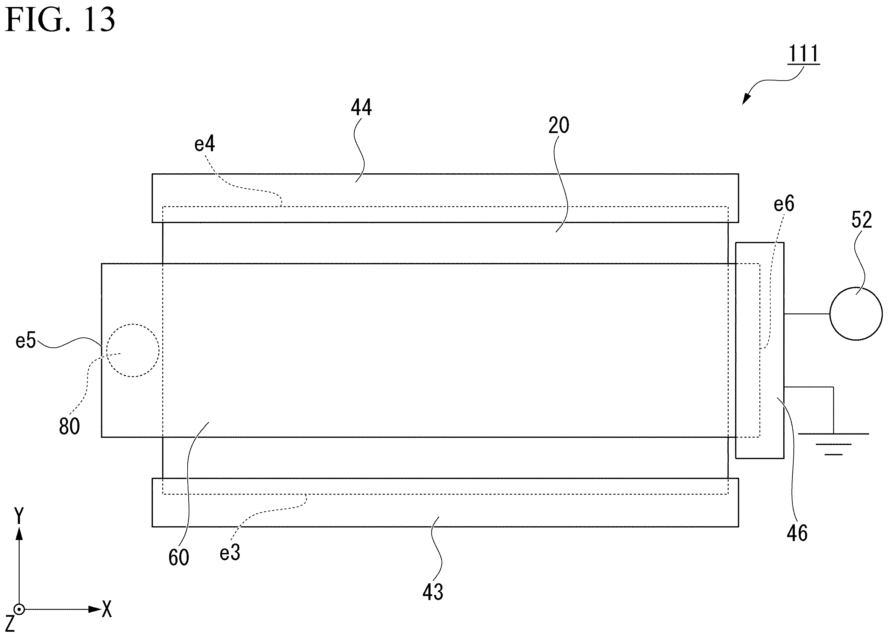

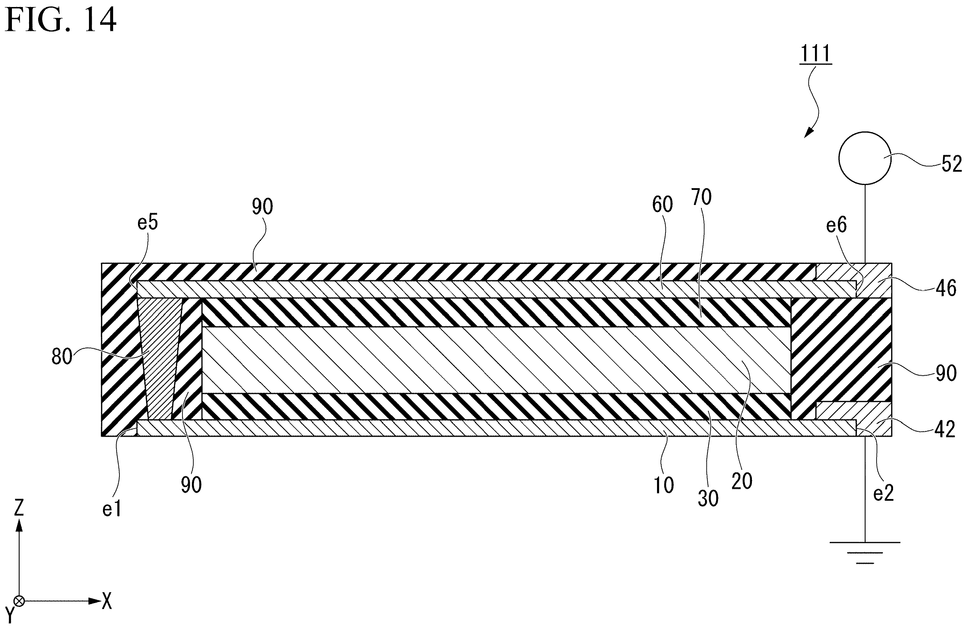

FIG. 13 is a plan view of a spin transducer 111 according to a first modified example of the second embodiment. FIG. 14 is an XZ cross-sectional view of the spin transducer 111 according to the first modified example of the second embodiment. In the spin transducer 111, the same components as those in the spin transducer 110 are designated by the same reference numerals, and the description thereof will be omitted.

The spin transducer 111 has, for example, a first spin orbit torque wiring layer 10, a second spin orbit torque wiring layer 20, a third spin orbit torque wiring layer 60, a first spin wave propagation layer 30, a second spin wave propagation layer 70, and a connection wiring 80. The spin transducer 111 includes the connection wiring 80 instead of the fifth terminal 45 and the sixth terminal 46. The spin transducer 111 also includes a power source 52 instead of the power sources 50 and 51.

The connection wiring 80 is a conductor. The connection wiring 80 connects, for example, the first end e1 of the first spin orbit torque wiring layer 10 and the first end e5 of the third spin orbit torque wiring layer 60. The power source 52 is connected to the sixth terminal 46, and the second terminal 42 is connected to the ground. The power source 52 is configured to be able to apply a current or a voltage to the first spin orbit torque wiring layer 10 and the third spin orbit torque wiring layer 60.

When a potential difference is applied between the sixth terminal 46 and the second terminal 42 using the power source 52, a current flows in the X direction of the third spin orbit torque wiring layer 60 and the first spin orbit torque wiring layer 10. A direction of the current flowing through the third spin orbit torque wiring layer 60 is opposite to a direction of the current flowing through the first spin orbit torque wiring layer 10. That is, the spin transducer 111 according to the first modified example shows the same function as that of the spin transducer 110 with one power source 52.

The spin transducer 111 according to the first modified example provides the same effects as the spin transducer 110. Furthermore, the spin transducer 111 has fewer components and can be more easily miniaturized.

As described above, the spin transducer of the above-described embodiment functions as a current-voltage converter that converts current to voltage, a voltage-current converter that converts voltage to current, and a current transformer or voltage transformer that changes a magnitude of current or voltage. In the following, the conversion efficiency of a specific spin transducer was determined when a specific structure was specified.

### "First example"

In a first example, a spin transducer having an element structure shown in FIG. 1 was assumed. A ratio of the length L1 of the first spin orbit torque wiring layer 10 in the X-direction to the length L2 thereof in the Y-direction was set to 100:1. A ratio of the length of the second spin orbit torque wiring layer 20 in the X direction to the length thereof in the Y direction was set to 100:1. It is assumed that the first spin orbit torque wiring layer 10 and the second spin orbit torque wiring layer 20 are made of the same material, and that the spin-to-current conversion efficiency in each of the layers is 10%. The resistance of the first spin orbit torque wiring layer 10 in the X direction was set to 1 kΩ, and the resistance of the second spin orbit torque wiring layer 20 in the Y direction was set to 0.1 Ω. A voltage of 1 V was applied between the first end e1 and the second end e2. A current of 1 mA flows between the first end e1 and the second end e2. At this time, an electromotive force generated between the first end e3 and the second end e4 is 0.1 V, and a current of 1 A flows between the first end e3 and the second end e4. That is, the spin transducer according to the first embodiment amplified a current of 1 mA to 1 A and thus had a current amplification factor of 1000 times.

### "Second example"

A second example differs from the first example in that the spin-to-current conversion efficiency of each of the first spin orbit torque wiring layer 10 and the second spin orbit torque wiring layer 20 is assumed to be 1%. Other conditions of the second example were the same as those of the first example. In the second example, the electromotive force generated between the first end e3 and the second end e4 was 0.01 V, and a current of 1 mA flowed between the first end e3 and the second end e4. In other words, the current amplification factor of the spin transducer according to the second example was 1 time.

### "Third example"

A third example differs from the first example in that the spin-to-current conversion efficiency in each of the first spin orbit torque wiring layer 10 and the second spin orbit torque wiring layer 20 is assumed to be 100%. Other conditions of the third example were the same as those of the first example. In the third example, the electromotive force generated between the first end e3 and the second end e4 was 1 V, and a current of 10 A flowed between the first end e3 and the second end e4. In other words, the current amplification factor of the spin transducer according to the third example was 10,000 times.

### "Fourth example"

A fourth example differs from the first example in that shapes of the first spin orbit torque wiring layer 10 and the second spin orbit torque wiring layer 20 are changed. The ratio of the length L1 of the first spin orbit torque wiring layer 10 in the X direction to the length L2 thereof in the Y direction is set to 1000:1. The ratio of the length L3 of the second spin orbit torque wiring layer 20 in the X direction to the length L4 thereof in the Y direction was set to 1000: 1. The resistance of the first spin orbit torque wiring layer 10 in the X direction is 10 kΩ, and the resistance of the second spin orbit torque wiring layer 20 in the Y direction is 0.01 Ω. Other conditions of the fourth example were the same as those of the first example. In the fourth example, a current of 0.1 mA flows between the first end e1 and the second end e2. The electromotive force generated between the first end e3 and the second end e4 was 0.1 V, and a current of 10A flowed between the first end e3 and the second end e4. In other words, the current amplification factor of the spin transducer according to the fourth example was 10,000 times.

### "Fifth example"

A fifth example differs from the first example in that shapes of the first spin orbit torque wiring layer 10 and the second spin orbit torque wiring layer 20 are changed. The ratio of the length L1 of the first spin orbit torque wiring layer 10 in the X direction to the length L2 thereof in the Y direction was set to 20:1. The ratio of the length L3 of the second spin orbit torque wiring layer 20 in the X direction to the length L4 thereof in the Y direction was set to 20:1. The resistance of the first spin orbit torque wiring layer 10 in the X direction is 1 kΩ, and the resistance of the second spin orbit torque wiring layer 20 in the Y direction is 2.5 Ω. Other conditions of the fifth example were the same as those of the first example. In the fifth example, a current of 1 mA flows between the first end e1 and the second end e2. The electromotive force generated between the first end e3 and the second end e4 was 0.1 V, and a current of 40 A flowed between the first end e3 and the second end e4. In other words, the current amplification factor of the spin transducer according to the fifth example was 40 times.

### "Sixth example"

A sixth example differs from the fifth example in that the spin-current conversion efficiency in each of the first spin orbit torque wiring layer 10 and the second spin orbit torque wiring layer 20 is assumed to be 1%. Other conditions of the sixth example were the same as those of the fifth example. In the sixth example, the electromotive force generated between the first end e3 and the second end e4 was 0.01 V, and a current of 4 mA flowed between the first end e3 and the second end e4. In other words, the current amplification factor of the spin transducer according to the sixth example was 4 times.

### "Seventh example"

A seventh example differs from the sixth example in that the shapes of the first spin orbit torque wiring layer 10 and the second spin orbit torque wiring layer 20 are changed. The ratio of the length L1 of the first spin orbit torque wiring layer 10 in the X direction to the length L2 thereof in the Y direction is set to 10:1. The ratio of the length L3 of the second spin orbit torque wiring layer 20 in the X direction to the length L4 thereof in the Y direction is set to 10:1. The resistance of the first spin orbit torque wiring layer 10 in the X direction is 1 kΩ, and the resistance of the second spin orbit torque wiring layer 20 in the Y direction is 10 Ω. Other conditions of the seventh example were the same as those of the sixth example. In the seventh example, a current of 1 mA flowed between the first end e1 and the second end e2. The electromotive force generated between the first end e3 and the second end e4 was 0.01 V, and a current of 1 A flowed between the first end e3 and the second end e4. In other words, the current amplification factor of the spin transducer according to the seventh example is 1 time.

### "Eighth example"

An eighth example differs from the first example in that the shapes of the first spin orbit torque wiring layer 10 and the second spin orbit torque wiring layer 20 are changed. The ratio of the length L1 of the first spin orbit torque wiring layer 10 in the X direction to the length L2 thereof in the Y direction is set to 1:100. The ratio of the length L3 of the second spin orbit torque wiring layer 20 in the X direction to the length L4 thereof in the Y direction is set to 1:100. The resistance of the first spin orbit torque wiring layer 10 in the X direction is 0.1 Ω, and the resistance of the second spin orbit torque wiring layer 20 in the Y direction is 1 kΩ. Other conditions of the eighth example were the same as those of the first example. In the eighth example, a current of 10A flowed between the first end e1 and the second end e2. The electromotive force generated between the first end e3 and the second end e4 was 0.1 V, and a current of 0.1 mA flowed between the first end e3 and the second end e4. In other words, the current amplification factor of the spin transducer according to the eighth example was 1/10000.

### "Ninth example"

A length of the first spin orbit torque wiring layer 10 in the X direction was 100 µm, a length thereof in the Y direction was 1 µm, a thickness thereof in the Z direction was 1 nm, it was made of Ta, and a resistivity thereof was 12 mΩcm. The resistance of the first spin orbit torque wiring layer in the X direction 10 is 2400 Ω. When a voltage of 1 V is applied in the X direction of the first spin orbit torque wiring layer 10, a current of 0.417 mA flows in the X direction of the first spin orbit torque wiring layer 10. A length of the second spin orbit torque wiring layer 20 in the X direction was 1 µm, a length thereof in the Y direction was 100 µm, and a thickness thereof in the Z direction was 1 nm. It is assumed that the first spin orbit torque wiring layer 10 and the second spin orbit torque wiring layer 20 are made of the same material, and that the spin-to-current conversion efficiency in each of the layers is 10%. The resistance of the second spin orbit torque wiring layer 20 in the Y direction is 0.24 Ω. A potential difference of 0.1 V occurs in the Y direction of the second spin orbit torque wiring layer 20, and a current of 417 mA flows in the Y direction of the second spin orbit torque wiring layer 20. The current amplification factor of the spin transducer according to the ninth example was 1000 times.

### "Tenth example"

A tenth example differs from the ninth example in that the spin-to-current conversion efficiency of each of the first spin orbit torque wiring layer 10 and the second spin orbit torque wiring layer 20 is assumed to be 1%. Other conditions of the tenth example were the same as those of the ninth example. In the tenth example, the electromotive force generated between the first end e3 and the second end e4 was 0.01 V, and a current of 41.7 mA flowed between the first end e3 and the second end e4. In other words, the current amplification factor of the spin transducer according to the tenth example was 100 times.

### "Eleventh example"

A length of the first spin orbit torque wiring layer 10 in the X direction was 100 µm, a length thereof in the Y direction was 1 µm, a thickness thereof in the Z direction was 5 nm, it is made of a material of Ta, and a resistivity thereof was 12 mΩcm. The resistance of the first spin orbit torque wiring layer 10 in the X direction is 2400 Ω. When a voltage of 1 V is applied to the first spin orbit torque wiring layer 10 in the X direction, a current of 0.417 mA flows in the X direction of the first spin orbit torque wiring layer 10. A length of the second spin orbit torque wiring layer 20 in the X direction was 1 µm, a length thereof in the Y direction was 100 µm, and a thickness thereof in the Z direction was 5 nm. It was assumed that the first spin orbit torque wiring layer 10 and the second spin orbit torque wiring layer 20 were made of the same material, and the spin-to-current conversion efficiency of each was 10%. The resistance of the second spin orbit torque wiring layer 20 in the Y direction is 0.24 Ω. A potential difference of 0.001 V occurs in the Y direction of the second spin orbit torque wiring layer 20, and a current of 4.17 mA flows in the Y direction of the second spin orbit torque wiring layer 20. The current amplification factor of the spin transducer according to the eleventh example was 10 times.

### "Twelfth example"

A twelfth example differs from the eleventh example in that the spin-to-current conversion efficiency of each of the first spin orbit torque wiring layer 10 and the second spin orbit torque wiring layer 20 is assumed to be 1%. Other conditions of the twelfth example were the same as those of the eleventh embodiment. In the twelfth example, the electromotive force generated between the first end e3 and the second end e4 was 0.001 V, and a current of 0.417 mA flowed between the first end e3 and the second end e4. In other words, the current amplification factor of the spin transducer according to the twelfth example was 1 time.

### "Thirteenth example"

A thirteenth example differs from the twelfth example in that the length of the first spin orbit torque wiring layer 10 in the Y direction is 0.1 µm, and the length of the second spin orbit torque wiring layer 20 in the X direction is 0.1 µm. Other conditions in the thirteenth example were the same as those in the twelfth example. The resistance of the first spin orbit torque wiring layer 10 in the X direction was 24000 Ω. When a voltage of 0.1 V is applied in the X direction of the first spin orbit torque wiring layer 10, a current of 0.0417 mA flows in the X direction of the first spin orbit torque wiring layer 10. The resistance of the second spin orbit torque wiring layer 20 in the Y direction is 0.24 Ω. A potential difference of 0.001 V occurs in the Y direction of the second spin orbit torque wiring layer 20, and a current of 0.417 mA flows in the Y direction of the second spin orbit torque wiring layer 20. The current amplification factor of the spin transducer in the thirteenth example was 10 times.

### "Fourteenth example"

In a fourteenth example, a spin transducer having the element structure shown in FIG. 1 was assumed. A ratio of the length L1 of the first spin orbit torque wiring layer 10 in X direction to the length L2 thereof in the Y direction was set to 100:1. A ratio of the length L3 of the second spin orbit torque wiring layer 20 in the X-direction to the length L4 thereof in the Y direction was set to 100:1. It is assumed that the first spin orbit torque wiring layer 10 and the second spin orbit torque wiring layer 20 are made of the same material, and that the spin-to-current conversion efficiency in each layer is 10%. The resistance of the first spin orbit torque wiring layer 10 in the X direction was set to 1 kΩ, and the resistance of the second spin orbit torque wiring layer 20 in the Y direction was set to 0.1 Ω. A voltage of 1 V was applied between the first end e1 and the second end e2. A current of 1 mA flowed between the first end e1 and the second end e2. At this time, an electromotive force generated between the first end e3 and the second end e4 was 0.1 V, and a potential difference of 10 µV occured between the first end e3 and the second end e4. In other words, the spin transducer of the fourteenth example converted a potential difference of 1 V into 10 µV, and the voltage amplification factor was 1/10000 times.

### "Fifteenth example"

In a fifteenth example, a spin transducer having the element structure shown in FIG. 1 was assumed. A ratio of the length L1 of the first spin orbit torque wiring layer 10 in the X direction to the length L2 thereof in the Y direction was set to 1:100. A ratio of the length L3 of the second spin orbit torque wiring layer 20 in the X direction to the length L4 thereof in the Y direction is set to 1:100. It is assumed that the first spin orbit torque wiring layer 10 and the second spin orbit torque wiring layer 20 are made of the same material, and the spin-current conversion efficiency of each is 10%. The resistance of the first spin orbit torque wiring layer 10 in the X direction was set to 1 kΩ, and the resistance of the second spin orbit torque wiring layer 20 in the Y direction was set to 1 kΩ. A voltage of 1 V was applied between the first end e1 and the second end e2. A current of 10A flowed between the first end e1 and the second end e2. At this time, an electromotive force generated between the first end e3 and the second end e4 was 0.1 V, and a potential difference of 1 kV occured between the first end e3 and the second end e4. In other words, the spin transducer of the fifteenth example converted a potential difference of 1 V into 1 kV, and the voltage amplification factor was 1000 times.

### EXPLANATION OF REFERENCES

10 First spin orbit torque wiring layer
20 Second spin orbit torque wiring layer
30 First spin wave propagation layer
41 First terminal
42 Second terminal
43 Third terminal
44 Fourth terminal
45 Fifth terminal
46 Sixth terminal
50, 51, 52 Power source
60 Third spin orbit torque wiring layer
70 Second spin wave propagation layer
80 Connection wiring
90 Insulating layer
100, 101, 102, 103, 110, 111 Spin transducer
e1, e3, e5 First end
e2, e4, e6 Second end
I1, I2, I2', I3 Current

## Claims

1. A spin transducer (100) comprising:
a first spin orbit torque wiring layer (10);
a second spin orbit torque wiring layer (20); and
a first spin wave propagation layer (30),
wherein the first spin wave propagation layer (30) is between the first spin orbit torque wiring layer (10) and the second spin orbit torque wiring layer (20),
a current or voltage is applied between a first end and a second end of the first spin orbit torque wiring layer (10) in a first direction and a current or voltage between a third end and a fourth end of the second spin orbit torque wiring layer (20) is output, and
the third end and the fourth end are at different positions on the second spin orbit torque wiring layer (20) in a second direction perpendicular to the first direction.

2. The spin transducer according to claim 1, wherein the first spin wave propagation layer is a magnetic insulator.

3. The spin transducer according to claim 1, wherein the first spin orbit torque wiring layer has a length in the first direction longer than a length in the second direction, and
a length of the second spin orbit torque wiring layer in the second direction is longer than a length of the first spin orbit torque wiring layer in the second direction.

4. The spin transducer according to claim 1, wherein the first spin orbit torque wiring layer has a length in the first direction longer than a length in the second direction, and
the second spin orbit torque wiring layer has a length in the first direction longer than a length in the second direction.

5. The spin transducer according to claim 1, wherein a second current flowing between the third end and the fourth end is greater than a first current flowing between the first end and the second end.

6. The spin transducer according to claim 1, wherein a second potential difference between the third end and the fourth end is greater than a first potential difference between the first end and the second end.

7. The spin transducer according to claim 1, further comprising a power source,
wherein the power source applies a current or voltage between the first end and the second end.

8. The spin transducer according to claim 1, further comprising a first terminal, a second terminal, a third terminal and a fourth terminal,
wherein the first terminal is connected to the first end,
the second terminal is connected to the second end,
the third terminal is connected to the third end, and
the fourth terminal is connected to the fourth end.

9. The spin transducer according to claim 1, wherein when seen in a lamination direction, an overlapping surface in which the first spin orbit torque wiring layer and the second spin orbit torque wiring layer overlap satisfies (a/b)²xr>1,
a is a length of the overlapping surface in the first direction,
b is a length of the overlapping surface in the second direction,
r satisfies r=B/A,
A is a current density of the first spin orbit torque wiring layer, and
B is a current density of the second spin orbit torque wiring layer.

10. The spin transducer according to claim 1, further comprising a third spin orbit torque wiring layer and a second spin wave propagation layer,
wherein the second spin wave propagation layer is between the second spin orbit torque wiring layer and the third spin orbit torque wiring layer,
a current or voltage is applied between a fifth end and a sixth end of the third spin orbit torque wiring layer in the first direction,
the fifth end is located at a position at which it faces the first end in the lamination direction, and
a first current flowing between the first end and the second end and a third current flowing between the fifth end and the sixth end flow in opposite directions.

11. The spin transducer according to claim 1, further comprising a third spin orbit torque wiring layer, a second spin wave propagation layer, and a connection wiring,
wherein the second spin wave propagation layer is between the second spin orbit torque wiring layer and the third spin orbit torque wiring layer,
a current or voltage is applied between a fifth end and a sixth end of the third spin orbit torque wiring layer in the first direction,
the fifth end is located at a position at which it faces the first end in the lamination direction, and
the first end and the fifth end are directly connected by the connection wiring.

12. The spin transducer according to claim 1, further comprising a third spin orbit torque wiring layer and a second spin wave propagation layer,
wherein the second spin wave propagation layer is between the second spin orbit torque wiring layer and the third spin orbit torque wiring layer, and
the first spin wave propagation layer and the second spin wave propagation layer are made of the same material.

13. The spin transducer according to claim 1, wherein a thickness of the first spin wave propagation layer is 6 nm or more.

14. The spin transducer according to claim 1, wherein a thickness of the first spin wave propagation layer is equal to or less than a spin conduction length.

15. The spin transducer according to claim 1, wherein the first spin wave propagation layer is made of any one of a ferromagnetic material, a ferrimagnetic material, and an antiferromagnetic material.

16. The spin transducer according to claim 1, wherein either the first spin orbit torque wiring layer or the second spin orbit torque wiring layer is a topological insulator.

## Patentansprüche

1. Ein Spin-Wandler (100), umfassend
eine erste Spin-Orbit-Drehmoment-Verdrahtungsschicht (10);
eine zweite Spin-Orbit-Drehmoment-Verdrahtungsschicht (20); und
eine erste Spin-Wellen-Ausbreitungsschicht (30),
wobei die erste Spin-Wellen-Ausbreitungsschicht (30) zwischen der ersten Spin-Orbit-Drehmoment-Verdrahtungsschicht (10) und der zweiten Spin-Orbit-Drehmoment-Verdrahtungsschicht (20) ist,
ein Strom oder eine Spannung zwischen einem ersten Ende und einem zweiten Ende der ersten Spin-Orbit-Drehmoment-Verdrahtungsschicht (10) in einer ersten Richtung angelegt wird, und ein Strom oder eine Spannung zwischen einem dritten Ende und einem vierten Ende der zweiten Spin-Orbit-Drehmoment-Verdrahtungsschicht (20) ausgegeben wird, und
das dritte Ende und das vierte Ende sich an unterschiedlichen Positionen auf der zweiten Spin-Orbit-Drehmoment-Verdrahtungsschicht (20) in einer zweiten Richtung senkrecht zu der ersten Richtung befinden.

2. Der Spin-Wandler nach Anspruch 1, wobei die erste Spin-Wellen-Ausbreitungsschicht ein magnetischer Isolator ist.

3. Der Spin-Wandler nach Anspruch 1, wobei die erste Spin-Orbit-Drehmoment-Verdrahtungsschicht eine Länge in der ersten Richtung hat, die größer ist als eine Länge in der zweiten Richtung, und
eine Länge der zweiten Spin-Orbit-Drehmoment-Verdrahtungsschicht in der zweiten Richtung länger ist als eine Länge der ersten Spin-Orbit-Drehmoment-Verdrahtungsschicht in der zweiten Richtung.

4. Der Spin-Wandler nach Anspruch 1, wobei die erste Spin-Orbit-Drehmoment-Verdrahtungsschicht eine Länge in der ersten Richtung hat, die länger ist als eine Länge in der zweiten Richtung, und
die zweite Spin-Orbit-Drehmoment-Verdrahtungsschicht eine Länge in der ersten Richtung hat, die länger ist als eine Länge in der zweiten Richtung.

5. Der Spin-Wandler nach Anspruch 1, wobei ein zweiter Strom, der zwischen dem dritten Ende und dem vierten Ende fließt, größer ist als ein erster Strom, der zwischen dem ersten Ende und dem zweiten Ende fließt.

6. Der Spin-Wandler nach Anspruch 1, wobei eine zweite Potentialdifferenz zwischen dem dritten Ende und dem vierten Ende größer ist als eine erste Potentialdifferenz zwischen dem ersten Ende und dem zweiten Ende.

7. Der Spin-Wandler nach Anspruch 1, ferner umfassend eine Energiequelle ,
wobei die Energiequelle einen Strom oder eine Spannung zwischen dem ersten Ende und dem zweiten Ende anlegt.

8. Der Spin-Wandler nach Anspruch 1, ferner umfassend einen ersten Anschluss, einen zweiten Anschluss, einen dritten Anschluss und einen vierten Anschluss,
wobei der erste Anschluss mit dem ersten Ende verbunden ist,
der zweite Anschluss mit dem zweiten Ende verbunden ist,
der dritte Anschluss mit dem dritten Ende verbunden ist, und
der vierte Anschluss mit dem vierten Ende verbunden ist.

9. Der Spin-Wandler nach Anspruch 1, wobei, in einer Laminierungsrichtung gesehen, für eine Überlappungsfläche, in der sich die erste Spin-Orbit-Drehmoment-Verdrahtungsschicht und die zweite Spin-Orbit-Drehmoment-Verdrahtungsschicht überlappen, gilt: (a/b)²×r>1,
a eine Länge der überlappenden Oberfläche in der ersten Richtung ist,
b eine Länge der überlappenden Fläche in der zweiten Richtung ist,
für r gilt: r=B/A,
A eine Stromdichte der ersten Spin-Orbit-Drehmoment-Verdrahtungsschicht ist, und
B eine Stromdichte der zweiten Spin-Orbit-Drehmoment-Verdrahtungsschicht ist.

10. Der Spin-Wandler nach Anspruch 1, ferner umfassend eine dritte Spin-Orbit-Drehmoment-Verdrahtungsschicht und eine zweite Spin-Wellen-Ausbreitungsschicht,
wobei die zweite Spin-Wellen-Ausbreitungsschicht zwischen der zweiten Spin-Orbit-Drehmoment-Verdrahtungsschicht und der dritten Spin-Orbit-Drehmoment-Verdrahtungsschicht liegt,
ein Strom oder eine Spannung zwischen einem fünften Ende und einem sechsten Ende der dritten Spin-Orbit-Drehmoment-Verdrahtungsschicht in der ersten Richtung angelegt wird,
das fünfte Ende sich an einer Position befindet, an der es dem ersten Ende in der Laminierungsrichtung zugewandt ist, und
ein erster Strom, der zwischen dem ersten Ende und dem zweiten Ende fließt, und ein dritter Strom, der zwischen dem fünften Ende und dem sechsten Ende fließt, in entgegengesetzten Richtungen fließen.

11. Der Spin-Wandler nach Anspruch 1, ferner umfassend eine dritte Spin-Orbit-Drehmoment-Verdrahtungsschicht, eine zweite Spin-Wellen-Ausbreitungsschicht und eine Verbindungsverdrahtung,
wobei die zweite Spin-Wellen-Ausbreitungsschicht zwischen der zweiten Spin-Orbit-Drehmoment-Verdrahtungsschicht und der dritten Spin-Orbit-Drehmoment-Verdrahtungsschicht liegt,
ein Strom oder eine Spannung zwischen einem fünften Ende und einem sechsten Ende der dritten Spin-Orbit-Drehmoment-Verdrahtungsschicht in der ersten Richtung angelegt wird,
das fünfte Ende sich an einer Position befindet, an der es dem ersten Ende in der Laminierungsrichtung zugewandt ist, und
das erste Ende und das fünfte Ende direkt durch die Verbindungsverdrahtung verbunden sind.

12. Der Spin-Wandler nach Anspruch 1, ferner umfassend eine dritte Spin-Orbit-Drehmoment-Verdrahtungsschicht und eine zweite Spin-Wellen-Ausbreitungsschicht,
wobei die zweite Spin-Wellen-Ausbreitungsschicht zwischen der zweiten Spin-Orbit-Drehmoment-Verdrahtungsschicht und der dritten Spin-Orbit-Drehmoment-Verdrahtungsschicht liegt, und
die erste Spin-Wellen-Ausbreitungsschicht und die zweite Spin-Wellen-Ausbreitungsschicht von demselben Material gebildet sind.

13. Der Spin-Wandler nach Anspruch 1, wobei die Dicke der ersten Spin-Wellen-Ausbreitungsschicht 6 nm oder mehr ist.

14. Der Spin-Wandler nach Anspruch 1, wobei die Dicke der ersten Spin-Wellen-Ausbreitungsschicht gleich oder kleiner als die Spinleitungslänge ist.

15. Der Spin-Wandler nach Anspruch 1, wobei die erste Spin-Wellen-Ausbreitungsschicht von einem ferromagnetischen Material, einem ferrimagnetischen Material oder einem antiferromagnetischen Material gebildet ist.

16. Der Spin-Wandler nach Anspruch 1, wobei entweder die erste Spin-Orbit-Drehmoment-Verdrahtungsschicht oder die zweite Spin-Orbit-Drehmoment-Verdrahtungsschicht ein topologischer Isolator ist.

## Revendications

1. Transducteur de spin (100) comprenant:
une première couche de câblage à couple spin-orbite (10); une deuxième couche de câblage à couple spin-orbite (20); et
une première couche de propagation d'ondes de spin (30), dans lequel la première couche de propagation d'ondes de spin (30) se trouve entre la première couche de câblage à couple spin-orbite (10) et la deuxième couche de câblage à couple spin-orbite (20),
un courant ou une tension est appliqué entre une première extrémité et une deuxième extrémité de la première couche de câblage à couple spin-orbite (10) dans une première direction et un courant ou une tension entre une troisième extrémité et une quatrième extrémité de la deuxième couche de câblage à couple spin-orbite (20) est produit, et
la troisième extrémité et la quatrième extrémité se trouvent à des positions différentes sur la deuxième couche de câblage à couple spin-orbite (20) dans une deuxième direction perpendiculaire à la première direction.

2. Transducteur de spin selon la revendication 1, dans lequel la première couche de propagation d'ondes de spin est un isolant magnétique.

3. Transducteur de spin selon la revendication 1, dans lequel la première couche de câblage à couple spin-orbite a une longueur dans la première direction supérieure à une longueur dans la deuxième direction, et
une longueur de la deuxième couche de câblage à couple spin-orbite dans la deuxième direction est supérieure à une longueur de la première couche de câblage à couple spin-orbite dans la deuxième direction.

4. Transducteur de spin selon la revendication 1, dans lequel la première couche de câblage à couple spin-orbite a une longueur dans la première direction supérieure à une longueur dans la deuxième direction, et
la deuxième couche de câblage à couple spin-orbite a une longueur dans la première direction supérieure à une longueur dans la deuxième direction.

5. Transducteur de spin selon la revendication 1, dans lequel un deuxième courant circulant entre la troisième extrémité et la quatrième extrémité est supérieur à un premier courant circulant entre la première extrémité et la deuxième extrémité.

6. Transducteur de spin selon la revendication 1, dans lequel une deuxième différence de potentiel entre la troisième extrémité et la quatrième extrémité est supérieure à une première différence de potentiel entre la première extrémité et la deuxième extrémité.

7. Transducteur de spin selon la revendication 1, comprenant en outre une source d'alimentation,
dans lequel la source d'alimentation applique un courant ou une tension entre la première extrémité et la deuxième extrémité.

8. Transducteur de spin selon la revendication 1, comprenant en outre une première borne, une deuxième borne, une troisième borne et une quatrième borne,
dans lequel la première borne est reliée à la première extrémité,
la deuxième borne est reliée à la deuxième extrémité,
la troisième borne est reliée à la troisième extrémité, et
la quatrième borne est reliée à la quatrième extrémité.

9. Transducteur de spin selon la revendication 1 dans lequel, lorsqu'on l'observe dans une direction de stratification, une surface de chevauchement dans laquelle la première couche de câblage à couple spin-orbite et la deuxième couche de câblage à couple spin-orbite se chevauchent satisfait (a/b)²×r>1,
a est une longueur de la surface de chevauchement dans la première direction,
b est une longueur de la surface de chevauchement dans la deuxième direction,
r satisfait r = B/A,
A est une densité de courant de la première couche de câblage à couple spin-orbite, et
B est une densité de courant de la deuxième couche de câblage à couple spin-orbite.

10. Transducteur de spin selon la revendication 1, comprenant en outre une troisième couche de câblage à couple spin-orbite et une deuxième couche de propagation d'ondes de spin,
dans lequel la deuxième couche de propagation d'ondes de spin se trouve entre la deuxième couche de câblage à couple spin-orbite et la troisième couche de câblage à couple spin-orbite,
un courant ou une tension est appliqué entre une cinquième extrémité et une sixième extrémité de la troisième couche de câblage à couple spin-orbite dans la première direction,
la cinquième extrémité se situe à une position à laquelle elle fait face à la première extrémité dans la direction de stratification, et
un premier courant circulant entre la première extrémité et la deuxième extrémité et un troisième courant circulant entre la cinquième extrémité et la sixième extrémité circulent dans des directions opposées.

11. Transducteur de spin selon la revendication 1, comprenant en outre une troisième couche de câblage à couple spin-orbite, une deuxième couche de propagation d'ondes de spin, et un câblage de connexion,
dans lequel la deuxième couche de propagation d'ondes de spin se trouve entre la deuxième couche de câblage à couple spin-orbite et la troisième couche de câblage à couple spin-orbite,
un courant ou une tension est appliqué entre une cinquième extrémité et une sixième extrémité de la troisième couche de câblage à couple spin-orbite dans la première direction,
la cinquième extrémité se situe à une position à laquelle elle fait face à la première extrémité dans la direction de stratification, et
la première extrémité et la cinquième extrémité sont directement connectées par le câblage de connexion.

12. Transducteur de spin selon la revendication 1, comprenant en outre une troisième couche de câblage à couple spin-orbite et une deuxième couche de propagation d'ondes de spin,
dans lequel la deuxième couche de propagation d'ondes de spin se trouve entre la deuxième couche de câblage à couple spin-orbite et la troisième couche de câblage à couple spin-orbite, et
la première couche de propagation d'ondes de spin et la deuxième couche de propagation d'ondes de spin sont constituées du même matériau.

13. Transducteur de spin selon la revendication 1, dans lequel une épaisseur de la première couche de propagation d'ondes de spin est de 6 nm ou plus.

14. Transducteur de spin selon la revendication 1, dans lequel une épaisseur de la première couche de propagation d'ondes de spin est égale ou inférieure à une longueur de conduction de spin.

15. Transducteur de spin selon la revendication 1, dans lequel la première couche de propagation d'ondes de spin est constituée de n'importe quel matériau parmi un matériau ferromagnétique, un matériau ferrimagnétique, et un matériau antiferromagnétique.

16. Transducteur de spin selon la revendication 1, dans lequel soit la première couche de câblage à couple spin-orbite, soit la deuxième couche de câblage à couple spin-orbite est un isolant topologique.
